# EUROPEAN PATENT SPECIFICATION

(11) **EP 1 787 506 B1**
(45) Date of publication and mention of the grant of the patent: **09.12.2009**
(21) Application number: 06254431.7
(22) Date of filing: 24.08.2006
(51) Int. Cl.: A01G 3/053

(54) **Power tool**
Motorbetriebenes Gerät
Outil motorisé

(30) Priority: 21.11.2005 GB 0523649
(43) Date of publication of application: 23.05.2007
(73) Proprietor: Husqvarna UK Limited, County Durham, DL5 6UP (GB)
(72) Inventor: Douglas, James S., Darlington County Durham DL3 9JE (GB)
(74) Representative: Pratt, David Martin

(56) References cited:
- EP-A1- 0 750 836
- EP-A1- 1 131 994
- EP-A2- 0 811 315
- EP-A2- 0 832 555

## Description

This invention relates to a power tool, and in particular to an electrically-operated portable power tool such as a hedge trimmer, an electric saw or a chain saw.

This type of power tool is typically formed with a main body having a motor and a working implement in drivable engagement with the motor. The tool is provided with a main handle which is provided with an actuator for operation by the user, and with an auxiliary support handle to permit two-handed operation of the tool, thereby providing greater stability in use.

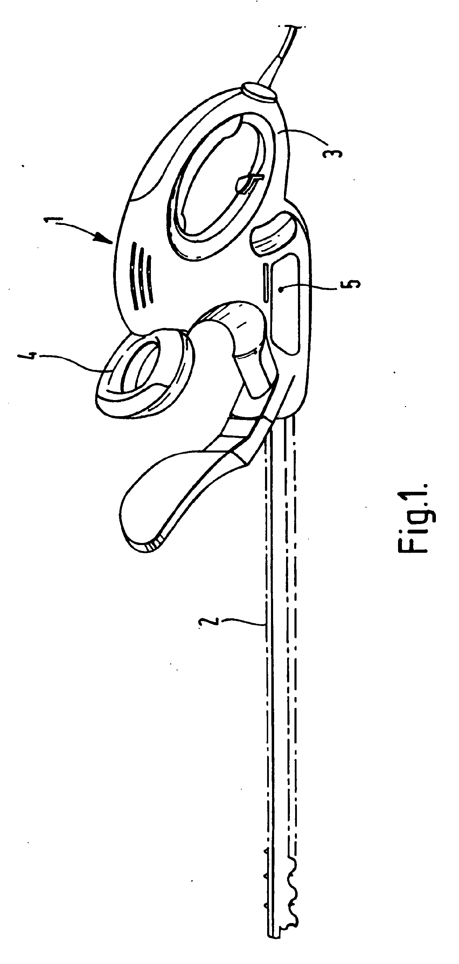

Figure 1 is a schematic representation of a known power tool (an electrically-powered hedge trimmer) which comprises a main body 1 housing an electric motor (not shown). The motor is in drivable engagement with an elongate cutter 2 in the form of a pair of reciprocable blades. The hedge trimmer is provided with a handle assembly constituted by a rear handle 3 positioned immediately on that side of the main body 1 remote from the cutter 2 and a front handle 4 provided on that side of the main body adjacent to the cutter.

The rear handle 3 is orientated to be in line with the central vertical plane of the trimmer, and the front handle lies at 90 ° to the plane of the rear handle. The front and rear handles 4 and 3 are positioned on opposite sides of the centre of gravity 5 of the hedge trimmer, so that the handle configuration is comfortable to use when cutting the top, horizontal part of a hedge, and also gives the operator a high degree of manoeuvrability and control when the hedge trimmer is in use. Unfortunately, however, when cutting the vertical side of a hedge, the user has to compromise the ergonomics by twisting the wrist of the hand gripping the front handle 4. Also, when cutting the vertical side of a hedge, the centre of gravity 5 of the product is offset from the handles 3 and 4, creating a moment that effectively twists the product in the user's grip.

Another known power tool is described in EP 1 131 994.

An aim of the invention is to provide a hedge trimmer having ergonomic advantages when trimming either in a vertical plane or a horizontal plane.

The present invention provides a power tool comprising a main body housing a motor, a working implement in drivable engagement with the motor, and a handle assembly associated with the main body, the handle assembly having a main handle positioned on that side of the main body remote from the working implement, characterised by first and second auxiliary handles positioned on that side of the main body facing the working implement, the first auxiliary handle being positioned adjacent to the main body and being constituted by a closed-loop portion of the handle assembly, said closed-loop portion defining a hand grip aligned with the central plane of symmetry of the main body.

Preferably, the main handle is constituted by a closed-loop portion of the handle assembly, said closed-loop portion defining a hand grip aligned with the central plane of symmetry of the main body.

Advantageously, the second auxiliary handle is a T-shaped handle extending forwardly of the first auxiliary handle, the bars of the T-shaped handle extending substantially at right-angles to the central plane of symmetry of the main body.

Conveniently, each of the handles is provided with an actuator for turning the motor on and off.

In a preferred embodiment, the motor is an electric motor which is provided with an electric switch, and the tool further comprises electrical circuitry linking the motor and the switch, the arrangement being such that the electric switch can only be actuated upon operation of the actuator associated with the main handle and one of the actuators associated with the first and second auxiliary handles.

Preferably, the actuators associated with the first and secondary auxiliary handles are provided on a common actuating member.

Advantageously, the actuating member is an L-shaped member, and the associated actuators protrude from respective arms of the L-shaped actuating member. Preferably, the actuating member is pivotally mounted within the handle assembly about a pivot point positioned substantially at the junction of the two arms of the L-shaped actuating member.

Conveniently, the tool further comprises a linkage interconnecting the free end portion of one arm of the L-shaped actuating member and the the electric switch, whereby pivotal movement of the L-shaped actuating member resulting from operation of either of the associated actuators is effective to turn the switch on and off.

In a preferred embodiment, the main body and the handle assembly are constituted by a pair of clamshell members which are joined together along the central plane of symmetry of the main body/handle assembly. In this case, the actuating member may be positioned within the two clamshell members, the pivot point being constituted by a pivot shaft defined by stub shafts formed integrally with the clamshell members.

The invention also provides an actuating mechanism for a power tool having a housing, a motor within the housing, and a working implement in drivable engagement with the motor, the actuating mechanism being constituted by an actuating member provided with two actuators, the actuating member being pivotally mounted within the housing in such a manner that operation of either of the actuators pivots the actuating member to turn the motor on and off.

In a preferred embodiment, the actuating member is an L-shaped member, and the associated actuators protrude from respective arms of the L-shaped actuating member. Preferably, the actuators protrude from apertures formed in the housing so as to be engagable by a user from the exterior of the housing.

Advantageously, the actuating member is pivotally mounted within the housing about a pivot point positioned substantially at the junction of the two arms of the L-shaped actuating member.

Preferably, the mechanism further comprises a linkage interconnecting the free end portion of one arm of the L-shaped actuating member and an operating member for turning the motor on and off, whereby pivotal movement of the L-shaped actuating member resulting from operation of either of the associated actuators is effective to turn the motor on and off.

The invention will now be described in greater detail, by way of example, with reference to the drawings, in which:-
Figure 1 is a schematic representation of a known hedge trimmer;
Figure 2 is a perspective view of a hedge trimmer constructed in accordance with the invention;
Figure 3 is a schematic, partially broken away side elevation of the hedge trimmer of Figure 2 showing a motor actuator in a first operating position; and
Figure 4 is a view similar to that of Figure 3, but showing the motor actuator in a second operating position.

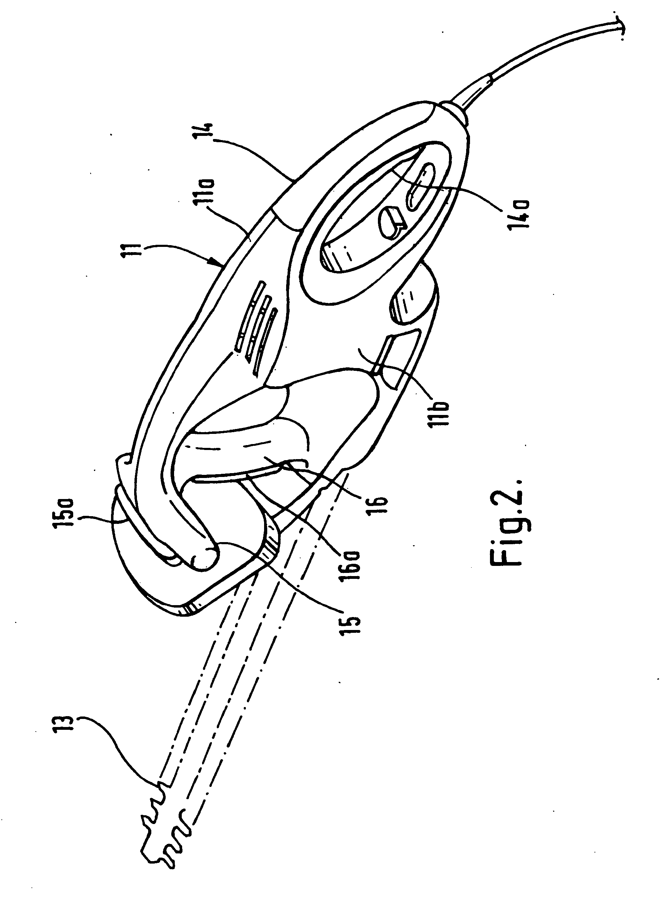

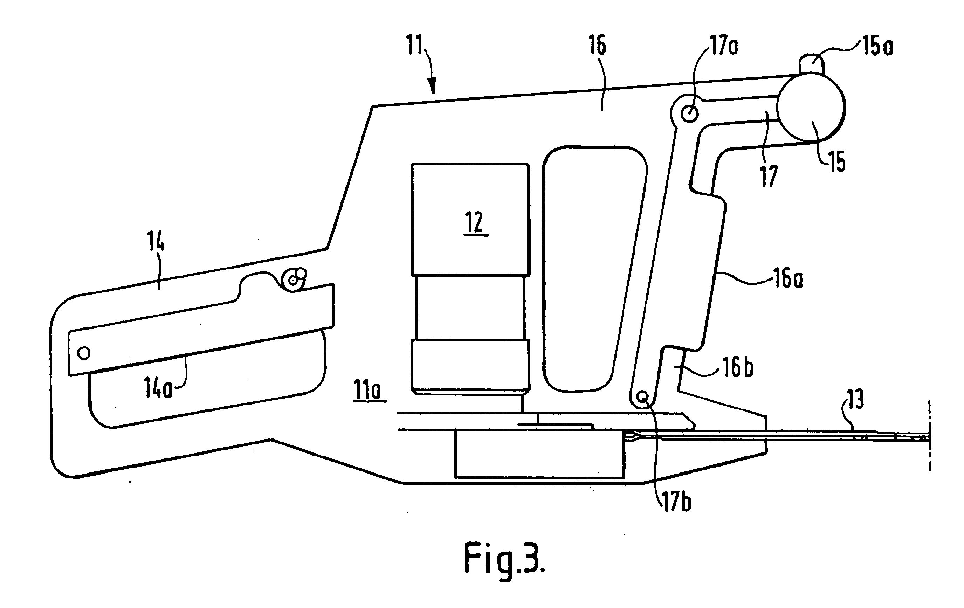

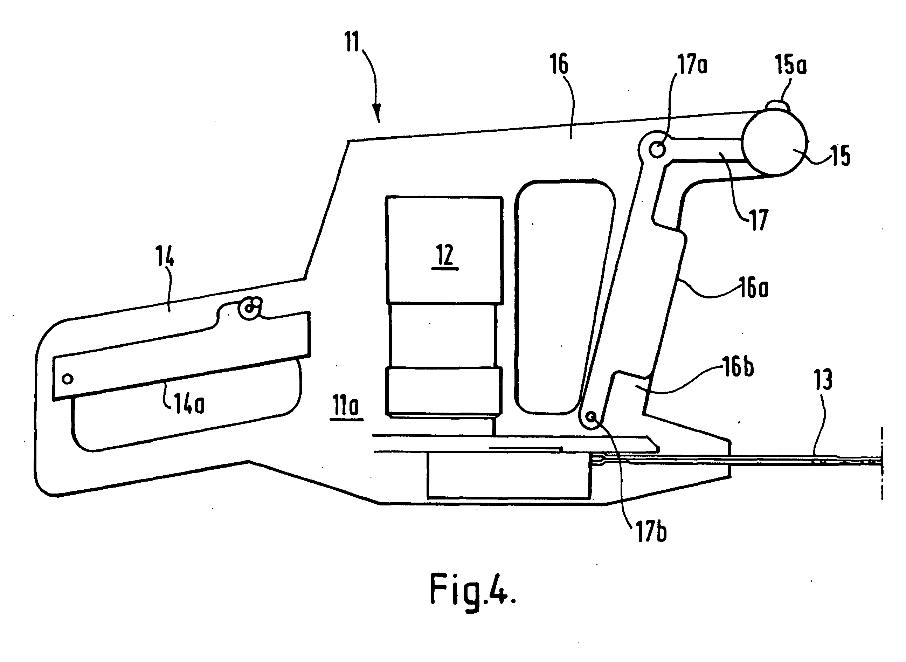

Referring to Figures 2 to 4 of the drawings, an electrically-powered hedge trimmer comprises a main body 11 housing an electric motor 12. The main body 11 is constituted by two complementary clamshells 11a and 11b, one of which (11a) is shown schematically in Figures 3 and 4. The clamshells 11a and 11b are injection moulded members made of a plastics material such as ABS. The motor 12 (see Figures 3 and 4) is housed within recesses formed in the central portion of the main body 11. The motor 12 is in drivable engagement with an elongate cutter 13 in the form of a pair of reciprocable blades.

The hedge trimmer is provided with a handle assembly constituted by a rear handle 14 positioned immediately on that side of the motor 12 remote from the cutter 13, a T-shaped front handle 15 provided on that side of the main body adjacent to the cutter, and an auxiliary handle 16 positioned between the front handle and the motor. The rear handle 14 is a loop-shaped handle whose central longitudinal axis coincides with the central vertical plane of the hedge trimmer. The bar of the T-shaped front handle 15 lies substantially at right-angles to the central vertical plane of the hedge trimmer, and the auxiliary handle 16 is a loop-shaped handle whose central longitudinal axis is aligned with the central vertical plane of the hedge trimmer.

The handles 14, 15 and 16 are provided with respective actuators 14a, 15a and 16a arranged in such a manner that the motor can be turned on and off by operation of the actuator 14a in conjunction with either the actuator 15a or the actuator 16a. For example, the electric motor 12 may be controlled by an electric switch (not shown) which can be actuated only by operation of the actuator 14a in conjunction with either of the actuators 15a and 16a.

In a first operating position, the user operates the hedge trimmer by gripping the rear handle 14 and the front handle 15, and turns the motor on and off by operating the actuators 14a and 15a. This is the normal operating position for horizontal trimming, the handles 14 and 15 being positioned so that the hedge trimmer is supported with the hands positioned substantially the same distance from the centre of gravity of the hedge trimmer, thereby ensuring that it is well balanced and easy to operate.

In a second operating position, the user operates the hedge trimmer by gripping the rear handle 14 and the auxiliary handle 16, and turns the motor on and off by operating the two actuators 14a and 16a. In order to operate the actuator 16a, the user places one hand through the loop-shaped auxiliary handle 16 so that his/her fingers wrap around the front of the upright portion 16b of that handle so as to be engagable with the actuator 16a. In this position, the user can operate the hedge trimmer in a substantially vertical position.

Referring now to Figures 3 and 4, which are schematic representations showing one of the clam shell 11a, it will be seen that the actuators 15a and 16a are formed as protrusions from an L-shaped actuating member 17 which is pivotally attached, by a pivot 17a, within the main body 11. The pivot 17a is constituted by pivot stub shafts formed integrally with the clamshell mouldings 11a and 11b. A linkage (not shown) extends between the lower end 17b of the actuating member 17 and the electric switch, so that pivotal movement of the actuating member, from the position shown in Figure 3 (the non-actuated position) to the position shown in Figure 4 (the actuated position) actuates the switch to turn the motor 12 on.

## Claims

1. A power tool comprising a main body (11) housing a motor (12), a working implement (13) in drivable engagement with the motor, and a handle assembly associated with the main body, the handle assembly having a main handle (14) positioned on that side of the main body remote from the working implement, **characterised by** first and second auxiliary handles (16, 15) positioned on that side of the main body facing the working implement, the first auxiliary handle (16) being positioned adjacent to the main body and being constituted by a closed-loop portion of the handle assembly defining a hand grip aligned with the central plane of symmetry of the main body.

2. A tool as claimed in claim 1, wherein the main handle (14) is constituted by a closed-loop portion of the handle assembly, said closed-loop portion defining a hand grip aligned with the central plane of symmetry of the main body (11).

3. A tool as claimed in claim 1 or claim 2, wherein the second auxiliary handle (15) is a T-shaped handle extending forwardly of the first auxiliary handle (16), the bars of the T-shaped handle extending substantially at right-angles to the central plane of symmetry of the main body (11).

4. A tool is claimed in any one of claims 1 to 3, wherein each of the handles (14, 15, 16) is provided with an actuator (14a, 15a, 16a) for turning the motor (12) on and off.

5. A power tool as claimed in claim 4, wherein the motor is an electric motor (12) which is provided with an electric switch, and the tool further comprises electrical circuitry linking the motor and the switch, the arrangement being such that the electric switch can only be actuated upon operation of the actuator (14a) associated with the main handle (14) and one of the actuators (16a, 15a) associated with the first and second auxiliary handles (16, 15).

6. A tool as claimed in claim 4 or claim 5, wherein the actuators (16a, 15a) associated with the first and secondary auxiliary handles (16, 15) are provided on a common actuating member (17).

7. A tool as claimed in claim 6, wherein the actuating member (17) is an L-shaped member, and the associated actuators (16a, 15a) protrude from respective arms of the L-shaped actuating member.

8. A tool as claimed in claim 7, wherein the actuating member (17) is pivotally mounted within the handle assembly about a pivot point (17a) positioned substantially at the junction of the two arms of the L-shaped actuating member.

9. A tool as claimed in claim 8, further comprising a linkage interconnecting the free end portion of one arm of the L-shaped actuating member (17) and the the electric switch, whereby pivotal movement of the L-shaped actuating member resulting from operation of either of the associated actuators is effective to turn the switch on and off.

10. A power tool as claimed in any one of claims 1 to 9, wherein the main body (11) and the handle assembly (14, 15, 16) are constituted by a pair of clamshell members (11a, 11b) which are joined together along the central plane of symmetry of the main body/handle assembly.

11. A tool as claimed in claim 10 when appendant to claim 8, wherein the actuating member (17) is positioned within the two clamshell members (11a, 11b), the pivot point (17a) being constituted by a pivot shaft defined by stub shafts formed integrally with the clamshell members.

## Patentansprüche

1. Motorbetriebenes Werkzeug mit einem Hauptkörper (11), in dem ein Motor (12) untergebracht ist, einem Arbeitsgerät (13) in Antriebseingriff mit dem Motor und einer dem Hauptkörper zugeordneten Griffanordnung, wobei die Griffanordnung einen Hauptgriff (14) aufweist, der auf der von dem Arbeitsgerät entfernten Seite des Hauptkörpers positioniert ist, **gekennzeichnet durch** einen ersten und einen zweiten Zusatzgriff (16, 15), die auf der zu dem Arbeitsgerät weisenden Seite des Hauptkörpers angeordnet sind, wobei der erste Zusatzgriff (16) neben dem Hauptkörper positioniert ist und **durch** einen geschlossenen Teil der Griffanordnung gebildet wird, der einen Handgriff definiert, der auf die mittlere Symmetrieebene des Hauptkörpers ausgerichtet ist.

2. Werkzeug nach Anspruch 1, wobei der Hauptgriff (14) durch einen geschlossenen Teil der Griffanordnung gebildet wird, wobei der geschlossene Teil einen auf die mittlere Symmetrieebene des Hauptkörpers (11) ausgerichteten Handgriff definiert.

3. Werkzeug nach Anspruch 1 oder 2, wobei der zweite Zusatzgriff (15) ein T-förmiger Griff ist, der sich von dem ersten Zusatzgriff (16) nach vorne erstreckt, wobei sich die Stangen des T-förmigen Griffs im Wesentlichen im rechten Winkel zur mittleren Symmetrieebene des Hauptkörpers (11) erstrecken.

4. Werkzeug nach einem der Ansprüche 1 bis 3, wobei jeder der Griffe (14, 15, 16) mit einem Betätigungsglied (14a, 15a, 16a) zum Ein- und Ausschalten des Motors (12) versehen ist.

5. Motorbetriebenes Werkzeug nach Anspruch 4, wobei der Motor ein Elektromotor (12) ist, der mit einem elektrischen Schalter versehen ist, und das Werkzeug weiterhin eine elektrische Schaltungsanordnung umfasst, die den Motor und den Schalter miteinander verbindet, wobei die Auslegung derart ist, dass der elektrische Schalter nur bei Bedienung des dem Hauptgriff (14) zugeordneten Betätigungsglieds (14a) und eines der dem ersten und dem zweiten Zusatzgriff (16, 15) zugeordneten Betätigungsglieder (16a, 15a) betätigt werden kann.

6. Werkzeug nach Anspruch 4 oder 5, wobei die dem ersten und dem zweiten Zusatzgriff (16, 15) zugeordneten Betätigungsglieder (16a, 15a) an einem gemeinsamen Bedienglied (17) vorgesehen sind.

7. Werkzeug nach Anspruch 6, wobei das Bedienglied (17) ein L-förmiges Glied ist und die zugeordneten Betätigungsglieder (16a, 15a) von jeweiligen Armen des L-förmigen Bedienglieds ragen.

8. Werkzeug nach Anspruch 7, wobei das Bedienglied (17) um einen im Wesentlichen an der Verbindungsstelle der beiden Arme des L-förmigen Bedienglieds positionierten Drehpunkt (17a) schwenkbar in der Griffanordnung angebracht ist.

9. Werkzeug nach Anspruch 8, das weiterhin ein Gestänge umfasst, das den freien Endteil eines Arms des L-förmigen Bedienglieds (17) und den elektrischen Schalter miteinander verbindet, wobei eine sich aus der Bedienung eines der zugehörigen Betätigungsglieder ergebende Schwenkbewegung des L-förmigen Bedienglieds den Schalter ein- und ausschaltet.

10. Werkzeug nach einem der Ansprüche 1 bis 9, wobei der Hauptkörper (11) und die Griffanordnung (14, 15, 16) durch ein Paar Klappschalenglieder (11a, 11b) gebildet werden, die entlang der mittleren Symmetrieebene der Hauptkörper/Griffanordnung miteinander verbunden sind.

11. Werkzeug nach Anspruch 10, sofern von Anspruch 8 abhängig, wobei das Bedienglied (17) in den beiden Klappschalengliedern (11a, 11b) positioniert ist, wobei der Drehpunkt (17a) durch eine Drehachse gebildet wird, die durch integral mit den Klappschalengliedern ausgebildete Wellenstümpfe definiert wird.

## Revendications

1. Outil motorisé, comprenant un corps principal (11) recevant un moteur (12), un équipement de travail (13) en engagement d'entraînement avec le moteur, et un ensemble de poignée associé au corps principal, l'ensemble de poignée ayant une poignée principale (14) positionnée sur le côté du corps principal opposé à l'équipement de travail, **caractérisé par** des première et deuxième poignées auxiliaires (16, 15), positionnées du côté du corps principal tourné vers l'équipement de travail, la première poignée auxiliaire (16) étant positionnée à côté du corps principal et étant constituée d'une portion en boucle fermée de l'ensemble de poignée définissant une prise manuelle alignée avec le plan de symétrie central du corps principal.

2. Outil selon la revendication 1, dans lequel la poignée principale (14) est constituée d'une portion en boucle fermée de l'ensemble de poignée, ladite portion en boucle fermée définissant une prise manuelle alignée avec le plan de symétrie central du corps principal (11).

3. Outil selon la revendication 1 ou 2, dans lequel la deuxième poignée auxiliaire (15) est une poignée en forme de T qui s'étend vers l'avant de la première poignée auxiliaire (16), les barres de la poignée en forme de T s'étendant substantiellement à angle droit par rapport au plan de symétrie central du corps principal (11).

4. Outil selon l'une quelconque des revendications 1 à 3, dans lequel chacune des poignées (14, 15, 16) est pourvue d'un actionneur (14a, 15a, 16a) pour mettre en marche et éteindre le moteur (12).

5. Outil motorisé selon la revendication 4, dans lequel le moteur est un moteur électrique (12) qui est pourvu d'un interrupteur électrique, et l'outil comprend en outre un circuit électrique reliant le moteur à l'interrupteur, l'agencement étant tel que l'interrupteur électrique ne puisse être actionné qu'en activant l'actionneur (14a) associé à la poignée principale (14) et l'un des actionneurs (16a, 15a) associés aux première et deuxième poignées auxiliaires (16, 15).

6. Outil selon la revendication 4 ou 5, dans lequel les actionneurs (16a, 15a) associés aux première et deuxième poignées auxiliaires (16, 15) sont prévus sur un organe d'actionnement commun (17).

7. Outil selon la revendication 6, dans lequel l'organe d'actionnement (17) est un organe en forme de L et les actionneurs associés (16a, 15a) dépassent de bras respectifs de l'organe d'actionnement en forme de L.

8. Outil selon la revendication 7, dans lequel l'organe d'actionnement (17) est monté de manière pivotante dans l'ensemble de poignée autour d'un pivot (17a) positionné substantiellement à la jonction des deux bras de l'organe d'actionnement en forme de L.

9. Outil selon la revendication 8, comprenant en outre une tringlerie reliant entre eux la portion d'extrémité libre d'un bras de l'organe d'actionnement en forme de L (17) à l'interrupteur électrique, le mouvement de pivotement de l'organe d'actionnement en forme de L résultant de l'actionnement de l'un ou l'autre des actionneurs associés servant à mettre en marche et à couper efficacement l'interrupteur.

10. Outil motorisé selon l'une quelconque des revendications 1 à 9, dans lequel le corps principal (11) et l'ensemble de poignée (14, 15, 16) sont constitués d'une paire d'organes en forme de coquillage (11a, 11b) qui sont réunis ensemble le long du plan de symétrie central du corps principal et de l'ensemble de poignée.

11. Outil selon la revendication 10 lorsqu'elle dépend de la revendication 8, dans lequel l'organe d'actionnement (17) est positionné dans les deux organes en forme de coquillage (11a, 11b), le pivot (17a) étant constitué d'une tige de pivot définie par des bouts de tige formés intégralement avec les organes en forme de coquillage.
